# EUROPÄISCHE PATENTSCHRIFT

(11) **EP 3 301 061 B1**
(45) Veröffentlichungstag und Bekanntmachung des Hinweises auf die Patenterteilung: **28.10.2020**
(21) Anmeldenummer: 16191338.9
(22) Anmeldetag: 29.09.2016
(51) Int. Cl.: B66C 1/10, B66C 1/62

(54) **ANSCHLAGMITTEL FÜR EINEN BREMSKALIBER**
LIFTING EQUIPMENT FOR BRAKE CALIPERS
ANSCHLAGMITTEL FÜR EINEN BREMSKALIBER

(43) Veröffentlichungstag der Anmeldung: 04.04.2018
(73) Patentinhaber: Nordex Energy GmbH, 22419 Hamburg (DE)
(72) Erfinder: Krasniqi, Adem, 22926 Ahrensburg (DE)
(74) Vertreter: Garrels, Sabine

(56) Entgegenhaltungen:
- EP-A2- 2 060 491
- DE-U1- 9 209 685
- DE-U1- 9 209 685
- US-A- 1 366 746
- US-A- 4 992 005
- US-A- 5 707 168

## Beschreibung

Die vorliegende Erfindung betrifft ein Anschlagmittel für Bremskaliber, welches für den Transport in der Produktion und im Servicebereich für Windenergieanlagen zur Anwendung kommt.

Eine Windenergieanlage besteht üblicherweise aus einem Turm und einer um die Längsachse des Turms drehbar auf dem Turmkopf gelagerten Gondel. Die Gondel trägt einen Rotor mit einer Rotornabe und mindestens einem Rotorblatt sowie einen Generator, der die von dem Rotor aus dem Wind entnommene Energie in elektrische Energie umwandelt.

Für die Drehung der Gondel der Windenergieanlage nach dem Wind wird ein sogenanntes Azimutsystem eingesetzt. Die Gondel wird ständig nach der Windrichtung ausgerichtet, um einen optimalen Ertrag zu erwirtschaften. Die Bezeichnung Azimut wird für alles benutzt, was mit der horizontalen Windnachführung der Gondel zu tun hat. Es ist bekannt, dazu ein motorisch angetriebenes Azimutsystem einzusetzen. Das Azimutsystem ist in der Regel zwischen dem Turmkopf und der Gondel angeordnet und umfasst in einer typischen Ausführung mehrere Azimutantriebe, ein Azimutlager und eine Azimutbremse mit einer Bremsscheibe und mehreren Azimutbremskalibern.

Der Transport der Azimutbremskaliber im Servicebereich ist aufgrund des relativ hohen Gewichts sehr schwierig und wird zurzeit händisch und in der Produktion mit einer Vorrichtung erledigt. Das Gewicht stellt ein Sicherheitsrisiko für die Service- und für die Produktionsmitarbeiter dar.

Nachteil der bisherigen Lösungen ist ein hohes Sicherheitsrisiko in der Produktion und im Servicebereich. Der händische Transport der Azimutbremskaliber im Servicebereich bedeutet einen hohen Aufwand und ist sehr zeitaufwändig.

Für den Transport von schweren Lasten werden in der Regel Anschlagmittel für das Heben durch Kräne oder dergleichen vorgesehen, welche anschließend wieder entfernt werden. So gibt es für jede Last auch ein entsprechendes Werkzeug als Anschlagmittel.

In der Veröffentlichung DE 29507653 U1 wird ein reibschlüssig klemmendes, als Zweibacken-Greifer ausgebildetes Lastaufnahmemittel mit veränderbarer Klemmweite offenbart. Zwei geometrisch unterschiedliche Greiferarme sind in einer gemeinsamen Ebene zangenartig zueinander angeordnet. Einer der Greiferarme weist eine Lasthakenform auf und beide Greiferarme besitzen einen gemeinsamen, auch bei unterschiedlicher Stellung zueinander unveränderlichen, Fixpunkt, in dem sie formschlüssig miteinander verbunden sind.

Das US-Patent US 5707168 A offenbart eine Verbindervorrichtung zum Anheben von Rohrflanschen, welche ein oder mehrere Verbindungsstäbe aufweist, die in Bolzenlöcher des Rohrflansches eingreifen. Außerdem wird die Verbindervorrichtung mit einer Hebeschraube an der Außenumfangsfläche des Rohrflansches fixiert.

### Darstellung der Erfindung

Aufgabe der Erfindung ist es, die Nachteile des Standes der Technik zu beseitigen und den Transport der Bremskaliber ohne Sicherheitsrisiko per Kran zu ermöglichen.

Die Aufgabe wird durch die in den Ansprüchen offenbarten Merkmale gelöst. Das erfindungsgemäße Anschlagmittel für einen Bremskaliber, welcher auf seiner oberen Seite mit mehreren Befestigungsbohrlöchern versehen ist, ist einerseits in mindestens einem Befestigungsbohrloch und andererseits an einer Rückseite des Bremskalibers mittels einer lösbaren Verbindung fest anordenbar, wobei das Anschlagmittel aus zwei, im rechten Winkel zueinander stehenden, fest miteinander verbundenen rechteckigen Platten besteht. Dazu sind eine obere Platte mit der oberen Seite des Bremskalibers und eine seitliche Platte mit der Rückseite des Bremskalibers verbindbar. Die obere Platte weist eine Öse als Anschlagpunkt auf. Weiterhin ist die obere Platte mit zwei nebeneinander liegenden, in Richtung der oberen Seite des Bremskalibers angeordneten Führungsbolzen verbunden, welche einen Eingriff in die Befestigungsbohrlöcher ermöglichen. Die Führungsbolzen entsprechen in ihren Abmessungen denen der Befestigungsbohrlöcher des Bremskalibers. Die seitliche Platte ist mit zwei verliersicheren Schrauben verbunden, welche mittig untereinander angeordnet sind.

In einem weiteren Ausführungsbeispiel ist einer der Führungsbolzen rohrförmig. Eine weitere Möglichkeit besteht darin, dass der Führungsbolzen an seinem unteren Ende hohl ausgeführt ist. Der rohrförmige oder teilweise hohle Führungsbolzen ist an seinem unteren Ende mit einem axialen, nach unten offenen Längsschlitz versehen. In diesem Fall ist im Innern des Führungsbolzens ein Spreizkonus angeordnet, welcher mit einer Schraube in Wirkverbindung steht. In dem Längsschlitz ist außerdem ein Pin gelagert. Diese Konstruktion ermöglicht es, nach dem Einführen des Führungsbolzens diesen durch den Spreizkonus zu befestigen, ohne dass sich dieser mitdreht.

In einem weiteren Ausführungsbeispiel weist die obere Platte zwei parallele Langlöcher auf, welche sich von einer äußeren, der seitlichen Platte abgewandten Kante aus längs der oberen Platte erstrecken. Die Öse ist mittig zwischen den Langlöchern angeordnet. Die Öse ist Teil einer Aufnahme, welche sich zwischen den Langlöchern längs der oberen Platte bis zur seitlichen Platte erstreckt und die seitliche Platte am oberen Ende im rechten Winkel mittig umfasst und in einer hohlzylindrischen Führung endet, durch welche eine erste verliersichere Schraube geführt wird.

Die Öse an der der seitlichen Platte abgewandten Kante ist in einem weiteren Ausführungsbeispiel direkt angeformt.

Das Anschlagmittel besteht aus Stahl.

Die Vorteile der Erfindung sind zum Einen ein sicherer Transport der Bremskaliber im Servicebereich und in der Produktion und zum Anderen eine bedeutende Zeitersparnis bei der Montage der Bremskaliber im Servicebereich. Hinzu kommt, dass sich durch die physische Erleichterung die Arbeitsbedingungen und die Sicherheit für die Servicemitarbeiter verbessern.

### Ausführung der Erfindung

Die Erfindung wird anhand von zwei Ausführungsbeispielen näher erläutert. Hierzu zeigen
Figur 1 eine einfache Ausführungsform des erfindungsgemäßen Anschlagmittels,
Figur 2 eine weitere Ausführungsform des erfindungsgemäßen Anschlagmittels,
Figur 3 ein Bremskaliber mit eingefügtem Anschlagmittel in einer dreidimensionalen Ansicht,
Figur 4 ein Bremskaliber mit eingefügtem Anschlagmittel in einer Seitenansicht,
Figur5 ein Teil-Schnitt S-S durch Figur 4.

Die erfindungsgemäße Lösung kann allgemein für Bremskaliber, beispielsweise für Azimutbremskaliber von Windenergieanlagen, zur Anwendung kommen. Ein Bremskaliber A ist auf seiner oberen Seite A1 mit zwei parallelen Reihen von Befestigungsbohrlöchern A3 versehen. Diese Befestigungsbohrlöcher A3 werden für die Verbindung mit dem erfindungsgemäßen Anschlagmittel genutzt. Eine spezifische Anwendung ist möglich.

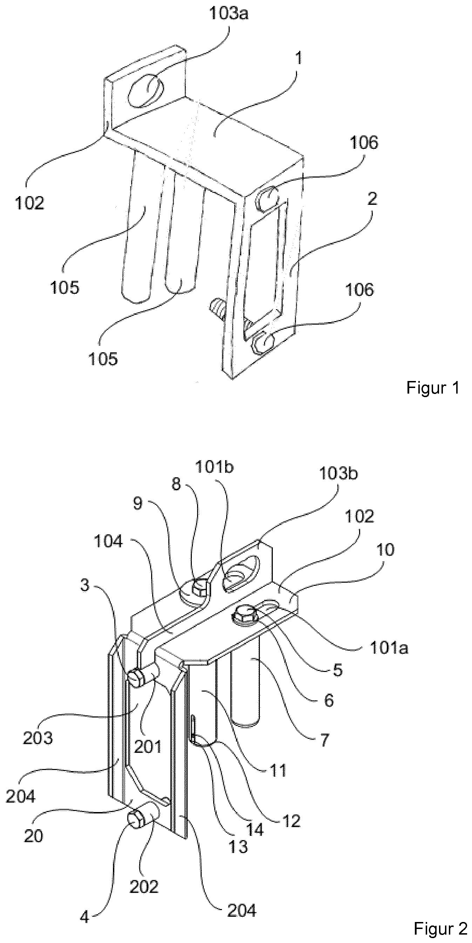

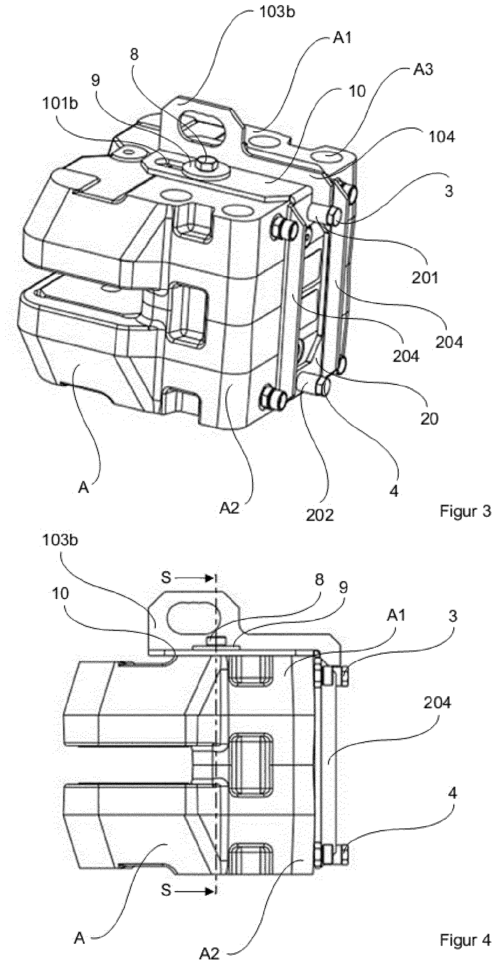

Das erfindungsgemäße Anschlagmittel wird in Figur 1 gezeigt und besteht aus zwei, im rechten Winkel zueinander stehenden, an jeweils einer ihrer kurzen Seiten fest miteinander verbundenen rechteckigen Platten 1 und 2. Die Platten sind vorzugsweise aus Stahl gefertigt. Das Anschlagmittel kann entsprechend dieses Ausführungsbeispiels als Winkelprofil auch aus einem Stück gefertigt sein. Die erste, obere Platte 1 wird mit der oberen Seite A1 eines Bremskalibers A verbunden und die zweite, seitliche Platte 2 ist an der Rückseite A2 des Bremskalibers A angeordnet (Figur 3 und 4). An der oberen Platte 1 ist eine Öse 103 als Anschlagpunkt für den Transport per Kran angeformt. Die Öse 103 befindet sich an der kurzen Seite der Platte 1. An der unteren Seite der Platte 1, in Richtung Bremskaliber A gerichtet, sind zwei Führungsbolzen 105 angeordnet, welche jeweils in nebeneinander liegende Befestigungsbohrlöcher A3 des Bremskalibers A eingreifen. Die Führungsbolzen 105 werden soweit in die Befestigungsbohrlöcher A3 eingeführt, bis die Platte 1 auf dem Bremskaliber A aufliegt. Die zweite Platte 2 weist zwei verliersichere Schrauben 106 auf, welche mittig untereinander angeordnet sind und zur Verbindung mit der Rückseite A2 des Bremskalibers A vorgesehen sind.

In dieser einfachen Ausführungsform wird das Anschlagmittel mit den zwei Führungsbolzen 105 in zwei nebeneinander und zur Rückseite A2 des Bremskalibers A parallel liegende Befestigungsbohrlöcher A3 eingeführt. Die an der Rückseite A2 des Bremskalibers A angeordnete Platte 2 wird mit Hilfe der beiden Schrauben 106 festgezogen. In die Öse 103 wird eine Krankette angeschlagen und der Kran kann den Bremskaliber A sicher transportieren.

Figur 2 zeigt eine weitere Ausführungsform des erfindungsgemäßen Anschlagmittels, welches ebenfalls aus zwei, im rechten Winkel zueinander stehenden, fest miteinander verbundenen rechteckigen Platten 10 und 20 besteht. Die Größe und das Material sind entsprechend des ersten Ausführungsbeispiels ausgeführt. In die erste, obere Platte 10 sind zwei parallele Langlöcher 101a und 101b eingearbeitet. Die Langlöcher 101a und 101b erstrecken sich von der äußeren, der seitlichen Platte 20 abgewandten Kante 102 aus längs der oberen Platte 10. Mittig zwischen den Langlöchern 101a und 101b ist eine Öse 103 als Anschlagpunkt für den Transport per Kran angeformt. Dies kann durch Schweißen, Kleben oder Löten erfolgen. Es ist vorstellbar, als Anschlagpunkt auch andere Mittel vorzusehen, beispielsweise einen Stahlring. Dieser sollte am äußeren Ende der oberen Platte 10 fest mit dieser verbunden sein. Die Öse 103 ist in diesem Ausführungsbeispiel Teil einer Aufnahme 104, welche sich zwischen den Langlöchern 101a und 101b längs der oberen Platte 10 bis zur seitlichen Platte 20 erstreckt und die seitliche Platte 20 am oberen Ende im rechten Winkel mittig umfasst. Die Aufnahme 104 endet in einer hohlzylindrischen Führung 201, durch welche eine verliersichere Schraube 3 geführt wird. Eine weitere verliersichere Schraube 4 wird in die seitliche Platte 20 durch eine zweite hohlzylindrische Führung 202 geführt, welche am unteren Ende der Platte 20 fest angeordnet ist. Die Schrauben 3 und 4 dienen der Sicherung und werden mit der Rückseite A2 des Bremskalibers A fest verbunden. Bevor das Anschlagmittel vom Bremskaliber A entfernt werden kann, müssen die beiden Schrauben 3 und 4 herausgedreht werden. Die seitliche Platte 20 hat in diesem Ausführungsbeispiel eine mittige Ausnehmung 203. An den beiden langen Seiten der seitlichen Platte 20 sind Versteifungen 204 angeformt. In dem vorliegenden Ausführungsbeispiel sind die Versteifungen 204 in Form von länglichen Schienen ausgebildet. In das erste Langloch 101a ist ein Führungsbolzen 7 mit einer verliersicheren Schraube 5 und einer Unterlegscheibe 6 und in das zweite Langloch 101b ist ein Führungsbolzen 11 mit einer verliersicheren Schraube 8 und einer Unterlegscheibe 9 eingefügt. Der Führungsbolzen 11 ist in Form eines Rohres oder teilweise hohl ausgeführt. Der Führungsbolzen 11 ist in dieser Ausführungsform als Rohr ausgebildet und an seinem unteren Ende 12 mit einem axialen Längsschlitz 13 versehen. Der Längsschlitz 13 ist hier nach unten offen. In dem Längsschlitz 13 ist ein Pin 14 gelagert. Der Führungsbolzen 7 kann kürzer sein als der Führungsbolzen 11.

Figur 3 und Figur 4 zeigen einen Bremskaliber A mit Anschlagmittel. Über die Langlöcher 101a und 101b wird mittels entsprechender Werkzeuge das Anschlagmittel mit dem Bremskaliber A verbunden. Über das erste Langloch 101a wird der Führungsbolzen 7 und über das zweite Langloch 101b wird der Führungsbolzen 11 in entsprechende, nebeneinander liegende Befestigungsbohrlöcher A3 des Bremskalibers A eingefügt. Der Führungsbolzen 7 und der Führungsbolzen 11 werden soweit in die Befestigungsbohrlöcher A3 eingeführt, bis die obere Platte 10 auf dem Azimutbremskaliber A aufliegt.

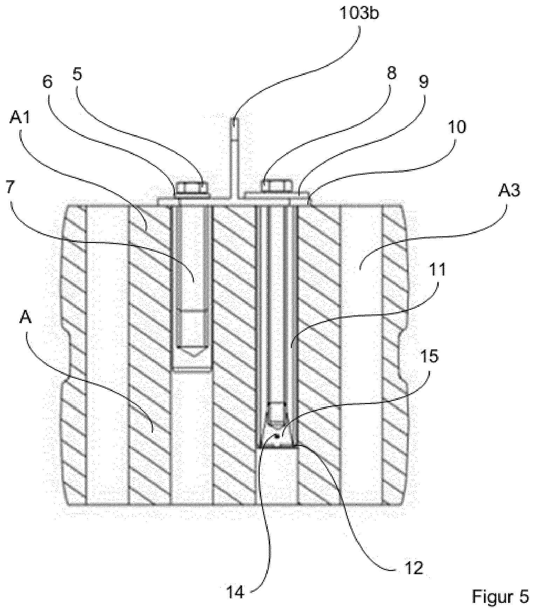

Figur 5 zeigt einen Teil-Schnitt S-S durch Figur 4, so dass der Führungsbolzen 7 und der Führungsbolzen 11 sichtbar sind. Im Innern des Führungsbolzens 11 befindet sich ein Spreizkonus 15, welcher mit der Schraube 8 in Wirkverbindung steht. Mit dem Spreizkonus 15 ist radial der Pin 14 verbunden, welcher in dem Schlitz 13 gelagert ist. Durch diese Anordnung ist der Spreizkonus 15 verdrehsicher angeordnet.

Zur Handhabung des Anschlagmittels werden der Führungsbolzen 7 und der Führungsbolzen 11 in die zwei nebeneinander angeordneten und zur Rückseite A2 des Bremskalibers A parallel liegenden Befestigungsbohrlöcher A3 eingeführt. Die an der Rückseite A2 des Bremskalibers A angeordnete seitliche Platte 20 wird mit Hilfe der beiden Schrauben 3 und 4 befestigt. Durch die Langlöcher 101a und 101b in der oberen Platte 10, welche sich auf der oberen Seite des Bremskalibers A befinden, kann das Anschlagmittel fest an den Bremskaliber A angezogen werden. Die Schraube 8 wird angezogen, wobei der Spreizkonus 15 sich hoch zieht und den Führungsbolzen 11 spreizt. Das Rohr wird in dem Befestigungsbohrloch A3 des Bremskalibers A festgeklemmt. Der Pin 14 verhindert, dass sich der Spreizkonus 15 beim Anziehen der Schraube 8 mitdreht. Durch diese Anordnung wird der Bremskaliber A durch den ausgespreizten Führungsbolzen 11 in dem Befestigungsbohrloch A3 gehalten. Die Schraube 5 mit dem Führungsbolzen 7 dient unter anderem als Verdrehsicherung beim Anziehen der Schraube 8. Die Schrauben 5 und 8 können zur besseren Unterscheidung unterschiedliche Markierungen aufweisen. In die Öse 103 wird eine Krankette angeschlagen und der Kran kann den Bremskaliber A sicher transportieren. Nach dem Transport werden die Krankette und die Schraube 8 gelöst. Bevor das Anschlagmittel von dem Bremskaliber A entfernt werden kann, müssen die zwei Schrauben 3 und 4 herausgedreht werden.

### Bezugszeichen

- A: Bremskaliber
- A1: obere Seite des Bremskalibers A
- A2: Rückseite des Bremskalibers A
- A3: Befestigungsbohrlöcher des Bremskalibers A

- 1; 10: obere Platte
- 2; 20: seitliche Platte
- 3: verliersichere Schraube
- 4: verliersichere Schraube
- 5: verliersicheren Schraube
- 6: Unterlegscheibe
- 7: Führungsbolzen
- 8: verliersichere Schraube
- 9: Unterlegscheibe
- 11: Führungsbolzen
- 12: unteres Ende des Führungsbolzens 11
- 13: Längsschlitz im Führungsbolzen 11
- 14: Pin
- 15: Spreizkonus

- 101a: Langloch
- 101b: Langloch
- 102: Kante der Platte 10
- 103a: Öse
- 103b: Öse
- 104: Aufnahme
- 105: Führungsbolzen
- 106: verliersichere Schrauben

- 201: erste hohlzylindrische Führung
- 202: zweite hohlzylindrische Führung
- 203: mittige Ausnehmung
- 204: Versteifungen

## Patentansprüche

1. Anschlagmittel für einen Bremskaliber (A), welcher auf seiner oberen Seite (A1) mit mehreren Befestigungsbohrlöchern (A3) versehen ist, wobei das Anschlagmittel einerseits an der oberen Seite (A1) des Bremskalibers (A) in mindestens einem Befestigungsbohrloch (A3) und andererseits an einer Rückseite (A2) des Bremskalibers (A) mittels einer lösbaren Verbindung fest anordenbar ist, **dadurch gekennzeichnet, dass** zwei, im rechten Winkel zueinander stehende, fest miteinander verbundene rechteckige Platten (1, 2; 10, 20) angeordnet sind, wobei eine obere Platte (1; 10) mit der oberen Seite (A1) des Bremskalibers (A) verbindbar und eine seitliche Platte (2; 20) mit der Rückseite (A2) des Bremskalibers (A) verbindbar ist, und dass die obere Platte (1; 10) eine Öse (103a; 103b) als Anschlagpunkt aufweist und dass die obere Platte (1; 10) mit zwei nebeneinander liegenden, in Richtung der oberen Seite (A1) des Bremskalibers (A) anordenbaren Führungsbolzen (105; 7, 11) verbunden ist, welche einen Eingriff in die Befestigungsbohrlöcher (A3) ermöglichen, und dass die seitliche Platte (2; 20) mit zwei verliersicheren Schrauben (106; 3, 4) verbunden ist, welche mittig untereinander angeordnet sind.

2. Anschlagmittel nach Anspruch 1 **dadurch gekennzeichnet, dass** einer der Führungsbolzen (11) rohrförmig oder an seinem unteren Ende (12) hohl ausgeführt ist.

3. Anschlagmittel nach Anspruch 2 **dadurch gekennzeichnet, dass** der rohrförmige oder teilweise hohle Führungsbolzen (11) an seinem unteren Ende (12) mit einem axialen, nach unten offenen Längsschlitz (13) versehen ist.

4. Anschlagmittel nach Anspruch 3 **dadurch gekennzeichnet, dass** im Innern des Führungsbolzens (11) ein Spreizkonus (15) angeordnet ist, welcher mit einer Schraube (8) in Wirkverbindung steht, und dass in dem Längsschlitz (13) ein Pin (14) gelagert ist.

5. Anschlagmittel nach Anspruch 1 **dadurch gekennzeichnet, dass** die obere Platte (10) zwei parallele Langlöcher (101a, 101b) aufweist, welche sich von einer äußeren, der seitlichen Platte (20) abgewandten Kante (102) aus längs der oberen Platte (10) erstrecken, und die Öse (103b) mittig zwischen den Langlöchern (101) angeordnet ist.

6. Anschlagmittel nach Anspruch 5 **dadurch gekennzeichnet, dass** die Öse (103b) Teil einer Aufnahme (104) ist, welche sich zwischen den Langlöchern (101a, 101b) längs der oberen Platte (10) bis zur seitlichen Platte (20) erstreckt und die seitliche Platte (20) am oberen Ende im rechten Winkel mittig umfasst und in einer hohlzylindrischen Führung (201) endet, durch welche eine erste verliersichere Schraube (3) geführt wird.

7. Anschlagmittel nach Anspruch 1 **dadurch gekennzeichnet, dass** die Öse (103a) an der der seitlichen Platte (2) abgewandten Kante (102) direkt angeformt ist.

8. Anschlagmittel nach einem der Ansprüche 1 bis 7 **dadurch gekennzeichnet, dass**
das Anschlagmittel aus Stahl besteht.

## Claims

1. Load handling device for a brake calliper (A) which on the upper side (A1) thereof is provided with a plurality of fastening bores (A3), wherein the load handling device by means of a releasable connection is fixedly disposable in at least one fastening bore (A3) on the upper side (A1) of the brake calliper (A), on the one hand, and on a rear side (A2) of the brake calliper (A), on the other hand, **characterized in that** two rectangular plates (1, 2; 10, 20) which are fixedly connected to one another so as to be mutually orthogonal are disposed, wherein an upper plate (1; 10) is connectable to the upper side (A1) of the brake calliper (A), and a lateral plate (2; 20) is connectable to the rear side (A2) of the brake calliper (A), and **in that** the upper plate (1; 10) has an eyelet (103a; 103b) as an attachment point, and **in that** the upper plate (1; 10) is connected by way of two guide studs (105; 7, 11) which are disposable so as to lie beside one another in the direction of the upper side (A1) of the brake calliper (A) and which enable an engagement in the fastening bores (A3), and **in that** the lateral plate (2; 20) is connected by way of two captive screws (106; 3, 4) which are disposed in a centric manner so as to be below one another.

2. Load handling device according to Claim 1, **characterized in that** one of the guide studs (11) is embodied so as to be tubular, or so as to be hollow at the lower end (12) thereof.

3. Load handling device according to Claim 2, **characterized in that** the tubular or partially hollow guide stud (11) at the lower end (12) thereof is provided with an axial longitudinal slot (13) which is open towards the bottom.

4. Load handling device according to Claim 3, **characterized in that** an expansion cone (15) which is operatively connected to a screw (8) is disposed in the interior of the guide stud (11), and **in that** a pin (14) is mounted in the longitudinal slot (13).

5. Load handling device according to Claim 1, **characterized in that** the upper plate (10) has two parallel oblong holes (101a, 101b) which from an outer edge (102) that faces away from the lateral plate (20) extend along the upper plate (10), and the eyelet (103b) is disposed in a centric manner between the oblong holes (101).

6. Load handling device according to Claim 5, **characterized in that** the eyelet (103b) is part of a receptacle (104) which between the oblong holes (101a, 101b) extends along the upper plate (10) up to the lateral plate (20) and in a centric manner orthogonally encompasses the lateral plate (20) at the upper end, terminating in a hollow-cylindrical guide (201) through which a first captive screw (3) is guided.

7. Load handling device according to Claim 1, **characterized in that** the eyelet (103a) is moulded directly on the edge (102) that faces away from the lateral plate (2).

8. Load handling device according to one of Claims 1 to 7, **characterized in that** the Load handling device is composed of steel.

## Revendications

1. Moyen de butée pour un étrier de frein (A), qui est muni sur son côté supérieur (A1) de plusieurs trous de perçage de fixation (A3), le moyen de butée pouvant être agencé de manière fixe d'un côté sur le côté supérieur (A1) de l'étrier de frein (A) dans au moins un trou de perçage de fixation (A3) et d'un autre côté sur un côté arrière (A2) de l'étrier de frein (A) au moyen d'une connexion amovible, **caractérisé en ce que** deux plaques rectangulaires (1, 2 ; 10, 20) disposées à angle droit l'une de l'autre, reliées de manière fixe l'une à l'autre, sont agencées, une plaque supérieure (1 ; 10) pouvant être reliée avec le côté supérieur (A1) de l'étrier de frein (A) et une plaque latérale (2 ; 20) pouvant être reliée avec le côté arrière (A2) de l'étrier de frein (A), et **en ce que** la plaque supérieure (1 ; 10) comprend un œillet (103a ; 103b) en tant que point de butée et **en ce que** la plaque supérieure (1 ; 10) est reliée avec deux boulons de guidage (105 ; 7, 11) disposés l'un à côté de l'autre, pouvant être agencés en direction du côté supérieur (A1) de l'étrier de frein (A), qui permettent une entrée en prise dans les trous de perçage de fixation (A3), et **en ce que** la plaque latérale (2 ; 20) est reliée avec deux vis imperdables (106 ; 3, 4), qui sont agencées de manière centrée entre elles.

2. Moyen de butée selon la revendication 1, **caractérisé en ce qu'**un des boulons de guidage (11) est configuré sous forme tubulaire ou sous forme creuse au niveau de son extrémité inférieure (12).

3. Moyen de butée selon la revendication 2, **caractérisé en ce que** le boulon de guidage tubulaire ou partiellement creux (11) est muni au niveau de son extrémité inférieure (12) d'une fente longitudinale axiale, ouverte vers le bas (13).

4. Moyen de butée selon la revendication 3, **caractérisé en ce qu'**un cône d'expansion (15) est agencé à l'intérieur du boulon de guidage (11), qui est en connexion active avec une vis (8), et **en ce qu'**une goupille (14) est montée dans la fente longitudinale (13) .

5. Moyen de butée selon la revendication 1, **caractérisé en ce que** la plaque supérieure (10) comprend deux trous longitudinaux parallèles (101a, 101b), qui s'étendent à partir d'un bord (102) extérieur, détourné de la plaque latérale (20), le long de la plaque supérieure (10), et l'œillet (103b) est agencé de manière centrée entre les trous longitudinaux (101) .

6. Moyen de butée selon la revendication 5, **caractérisé en ce que** l'œillet (103b) fait partie d'un logement (104), qui s'étend entre les trous longitudinaux (101a, 101b) le long de la plaque supérieure (10) jusqu'à la plaque latérale (20) et comprend la plaque latérale (20) à l'extrémité supérieure à angle droit de manière centrée et finit dans un guidage cylindrique creux (201), par lequel une première vis imperdable (3) est guidée.

7. Moyen de butée selon la revendication 1, **caractérisé en ce que** l'œillet (103a) est formé directement sur le bord (102) détourné de la plaque latérale (2).

8. Moyen de butée selon l'une quelconque des revendications 1 à 7, **caractérisé en ce que** le moyen de butée est constitué d'acier.
